# EUROPEAN PATENT SPECIFICATION

(11) **EP 3 127 609 B1**
(45) Date of publication and mention of the grant of the patent: **06.03.2019**
(21) Application number: 15772316.4
(22) Date of filing: 23.03.2015
(51) Int. Cl.: B01J 27/13, B01D 53/86, B01J 37/02, B01J 37/18, G21F 9/02

(54) **CATALYST FOR HYDROGEN COMBUSTION, PROCESS FOR PRODUCING SAME, AND METHOD FOR HYDROGEN COMBUSTION**
KATALYSATOR ZUR VERBRENNUNG VON WASSERSTOFF, VERFAHREN ZUR HERSTELLUNG DAVON UND VERFAHREN ZUR WASSERSTOFFVERBRENNUNG
CATALYSEUR DE COMBUSTION D'HYDROGÈNE, PROCÉDÉ POUR LE PRODUIRE, ET PROCÉDÉ DE COMBUSTION D'HYDROGÈNE

(30) Priority: 31.03.2014 JP 2014072923
(43) Date of publication of application: 08.02.2017
(73) Proprietor: National Institutes for Quantum and Radiological Science and Technology, Inage-ku Chiba-shi Chiba 263-8555 (JP); Tanaka Kikinzoku Kogyo K.K., Chiyoda-ku Tokyo 100-6422 (JP)
(72) Inventor: OHSHIMA, Yuusuke, Tsukuba-shi, Ibaraki 300-4247 (JP); KUBO, Hitoshi, Tsukuba-shi, Ibaraki 300-4247 (JP); NOGUCHI, Hirosi, Tsukuba-shi, Ibaraki 300-4247 (JP); TANIUCHI, Junichi, Tsukuba-shi, Ibaraki 300-4247 (JP); IWAI, Yasunori, Naka-gun, Ibaraki 319-1195 (JP); SATO, Katsumi, Naka-gun, Ibaraki 319-1195 (JP)
(74) Representative: Weickmann & Weickmann PartmbB
(86) International application number: PCT/JP2015/058787
(87) International publication number: WO 2015/151906

(56) References cited:
- EP-A1- 2 514 526
- WO-A1-2013/150030
- JP-A- S4 816 888
- JP-A- H10 216 516
- JP-A- 2004 502 280
- JP-A- 2011 139 991
- JP-A- 2011 230 064
- JP-B1- S3 615 014
- FRANCK MORFIN ET AL: "Catalytic combustion of hydrogen for mitigating hydrogen risk in case of a severe accident in a nuclear power plant: study of catalysts poisoning in a representative atmosphere", APPLIED CATALYSIS B: ENVIRONMENTAL, vol. 47, no. 1, 1 January 2004 (2004-01-01), pages 47-58, XP055413729, AMSTERDAM, NL ISSN: 0926-3373, DOI: 10.1016/j.apcatb.2003.07.001

## Description

### TECHNICAL FIELD

The present invention relates to a catalyst for combusting hydrogen (including isotope hydrogen) in the air containing iodine, and in particular, provides a hydrogen combustion catalyst which is hardly subjected to influence of moisture in an atmosphere and water generated by hydrogen combustion and which exhibits a slight decrease in activity by iodine.

### BACKGROUND ART

In recent years, many atomic power stations have been considering installation of a hydrogen combustion apparatus (hydrogen recombiner) as a measure for preventing hydrogen explosion of a nuclear reactor building at the time of a severe accident. The hydrogen combustion apparatus is equipment for causing hydrogen to undergo oxidation combustion (recombination) to water (water vapor) and for reducing a hydrogen concentration in a gas, and is expected as an effective measure for preventing hydrogen explosion even in a state of power loss at the time of an accident, because the apparatus does not require a power source.

A well-known hydrogen combustion catalyst to be used in the hydrogen combustion apparatus includes one in which a precious metal such as platinum or palladium is supported as catalyst metal on a suitable carrier. In addition, the application described above nw requires measures for moisture (water mist, water vapor) in the air and water generated by a hydrogen combustion reaction. Because, when these kinds of moisture are adsorbed to a catalyst, they cover an active site of the catalyst metal, which becomes a factor of decrease in activity.

There are some hydrogen combustion catalysts to which resistance against moisture in an atmosphere has been given. For example, there is also one in which a hydrophobic resin such as styrene - divinylbenzene copolymer (SDB) is applied to a carrier. Furthermore, the present applicant disclosed hydrogen combustion catalysts to which hydrophobicity was given by using an inorganic oxide such as silica or alumina as a carrier and modifying a hydroxyl group on the carrier surface with organic silane (PTL 1). These hydrophobic catalysts shows suppressed adsorption of water in an atmosphere and can exert hydrogen combustion capability without a decrease in a catalytic activity even under a wet environment.

### CITATION LIST

### PATENT LITERATURE

PTL 1: Japanese Patent No. 4807536

### SUMMARY OF INVENTION

### TECHNICAL PROBLEM

Incidentally, among severe accidents in an atomic power station, what is particularly concerned about is core meltdown. Generation of a large quantity of radioactive iodine is predicted at the time of core meltdown, and the catalyst poisoning by iodine becomes a problem recently.

In view of this, regarding a hydrogen combustion catalyst, there is no report that clarifies a measure for iodine poisoning in consideration of the use in an atomic power station. That is, the above-described hydrogen combustion catalyst having a carrier of a hydrophobic resin does not consider the problem of iodine poisoning at all, and, in addition to this, since the resin being the carrier is an organic substance and is combustible, there is an inherent problem that the resin is hard to appliy to hydrogen combustion. Furthermore, the hydrogen combustion catalyst described in PTL 1 undergoes generation of catalyst poisoning in an iodine-containing atmosphere to thereby cause a decrease in activity, although the catalyst does not generate a concern for combustion of the carrier and exerts hydrogen combustion capability. The decrease in activity is seen even in a case where reaction temperature is raised, and thus the decrease can not be handled by adjustment of reaction conditions.

Accordingly, the present invention provides a hydrogen combustion catalyst which treats a gas that contains iodine and hydrogen, and which is capable of maintaining hydrogen combustion reaction without influence of catalyst poisoning by iodine in addition to not being affected by moisture, and a manufacturing method of the hydrogen combustion catalyst.

### SOLUTION TO PROBLEM

The present invention that solves the above-described problem is a hydrogen combustion catalyst including a catalyst metal supported on a carrier made of an inorganic oxide, wherein: a functional group having at least one alkyl group with three or less carbon atoms is bonded to a terminal of a hydroxyl group on the carrier surface by substitution; platinum and palladium are supported as the catalyst metal; a ratio of supported amount between platinum and palladium on the carrier is in the range of 12:1 to 1:12 in terms of molar ratio; and a chlorine content is 300 ppm to 2,000 ppm per 1 mass% of the total supported amount of a supported amount of platinum and a supported amount of palladium.

It is confirmed that platinum and palladium have hydrogen combustion capability even in a singly supported state, but exhibit a decrease in the ability when iodine is contained in a gas to be treated. However, a study by the present inventors revealed that catalysts in which platinum and palladium concurrently exist can mitigate influence of iodine on catalyst poisoning and can suppress a decrease in activity. That is, a first characteristic of the present invention lies in that platinum and palladium are concurrently supported as a catalyst metal for treating an iodine-containing gas.

In addition, a second characteristic of the present invention lies in that a certain amount of chlorine is contained in a catalyst. Chlorine belongs to halogen as is the case for iodine, and is considered as an element that is easily adsorbed to a precious metal and becomes a factor of catalyst poison. The cause for generating a mitigating action of iodine poisoning by containing such chlorine is not clear. In this regard, the present inventors estimate that, when a small amount of chlorine is left on a precious metal surface of a catalyst, although certain performance degradation exists, an adhesive force of another halogen (iodine) weakens and accumulation of iodine on the whole precious metal surface is unlikely to take place, with the result that influence by iodine is mitigated. Usually, chlorine is often avoided depending on a reaction system to which a catalyst is applied, but in the present invention, the above-described action of chlorine is actively utilized. In addition, for that purpose, the inclusion of a certain amount of chlorine is an indispensable configuration.

Hereinafter, respective configurations of the present invention will be explained in more detail. The hydrogen combustion catalyst according to the present invention uses, as a prerequisite, an inorganic oxide as a carrier, and, further, one in which a hydroxyl group on the carrier surface has been modified with a prescribed functional group and has been hydrophobized is applied. The reason why an inorganic oxide is applied as a carrier is that there is no risk of ignition even when local heating by reaction heat is generated in a catalyst layer, and that there is no fear of radiation damage by a radioactive material. From this standpoint, a carrier made of resin cannot stand up to both heat and radiation, and has some concern about durability. In addition, preferably, inorganic oxides to be a carrier include alumina, silica, silica-alumina, zeolite, zirconia and titania. These inorganic oxides have been conventionally utilized as a catalyst carrier, and are excellent in porosity and heat resistance. Note that no particular limitation is imposed on the shape of a carrier. The carrier is ordinarily cylindrical or pellet-shaped sphere, but, in addition to these, these inorganic oxides are coated on a suitable support in a honeycomb, screen shape or the like, and the coating layer is used as a carrier in some cases. Note that, as to preferable physical properties of a carrier, a specific surface area is 70 to 300 m²/g, average pore diameter is 5 to 100 nm, and pore volume is 0.3 to 1.0 mL/g.

In addition, in the present invention, the above-described inorganic oxide in a hydrophobized state is applied as a carrier. The present invention depends on the proposition that a hydrogen gas that contains moisture (including water generated by hydrogen combustion) is treated, and hydrophobization of a carrier is necessary for suppressing decrease in activity by the water. Here, a modification treatment for hydrophobizing a carrier is to substitute a hydrogen part in a hydroxyl group (OH group) on the inorganic oxide surface with a functional group having an alkyl group. The functional group that modifies a hydroxyl group has at least one alkyl group at a terminal. The reason why a terminal of a hydroxyl group on the carrier surface is converted to an alkyl group is the alkyl group is excellent in an effect of lowering polarity of the carrier surface to thereby make it possible to discharge a water molecule rapidly without adsorption of the water molecule to the carrier. In addition, the number of carbons in the alkyl group is required to be 3 or less (a methyl group, an ethyl group, a propyl group). The number of carbons in the alkyl group exerts an influence on heat resistance to hydrophobization effect of a catalyst. A carrier modified with an alkyl group having a carbon number of more than 3 (a butyl group etc.) tends to lose hydrophobicity under high temperatures, and brings about moisture adsorption and catalyst deactivation due to the tendency. The heat resistance is not a direct problem in the present invention that premises a low temperature reaction, but should be avoided because unevenness of a reaction is generated when local temperature rise by reaction heat is caused in the catalyst layer. However, a functional group may have at least 1 alkyl group, and may have a plurality of alkyl groups.

Moreover, organic silane having an alkyl group is preferable as a functional group that modifies a hydroxyl group. This is because the organic silane having an alkyl group has various forms and excellent reactivity for a hydroxyl group, as a functional group having an alkyl group. Concrete examples of the functional groups will be described in a manufacturing method below.

Platinum and palladium are concurrently supported as catalyst metal on a hydrophobized inorganic oxide carrier. As described above, a state that can mitigate iodine poisoning and can suppress a decrease in activity of hydrogen combustion is limited to a state where platinum and palladium are concurrently supported. It is considered that the platinum and palladium on the carrier are supported in a state of being alloyed or in a state of being close to each other to thereby exert a mitigating action of iodine poisoning. From this angle, platinum alone or palladium alone does not exert a suppression effect of iodine poisoning.

Regarding supported amounts of platinum and palladium being catalyst metals, the total supported amount of platinum and palladium is preferably 0.1 mass% to 5.0 mass% based on the total mass of the catalyst (the total mass of the inorganic oxide in a state of being modified with a functional group, and catalyst metal). Note that, when the catalyst according to the present invention is used by having it coated and stacked on a structure such as a metal honeycomb, the total supported amount of platinum and palladium is preferably adjusted to be 0.5 to 10 g/L per volume of the structure. However, in this case, it is a prerequisite that the total supported amount of platinum and palladium should be set to be 0.1 mass% to 5.0 mass% relative to the total mass of the catalyst (the total mass of the inorganic oxide in a state of being modified with a functional group, and catalyst metal) to be coated on the structure.

Furthermore, a ratio of supported amounts between platinum and palladium on the carrier is set in a range of 12:1 to 1:12 in terms of molar ratio (platinum: palladium). This is because of exhibiting a suitable supported state of platinum and palladium (alloying, close supporting).

In addition, the hydrogen combustion catalyst according to the present invention requires inclusion of chlorine in a certain range. Concretely, the chlorine content is required to be 300 ppm to 2000 ppm per 1 mass% of the total supported amount of a supported amount of platinum and a supported amount of palladium. When the chlorine content is less than 300 ppm per 1 mass% of the total supported amount of platinum and palladium, the suppression effect of iodine poisoning cannot be observed. On the other hand, when the chlorine content exceeds 2000 ppm per 1 mass% of the total supported amount of platinum and palladium, poisoning of a metal particle surface by chlorine becomes large, thereby not giving sufficient catalyst performance. Note that the reason why the prescription of the chlorine content is based on the total supported amount of a supported amount of platinum and a supported amount of palladium is that a necessary chlorine amount changes in accordance with the amount of supported catalyst metal. For example, when the total supported amount of platinum and palladium is 1 mass%, chlorine of 300 ppm to 2000 ppm is necessary, and when the total supported amount of platinum and palladium is 1.5 mass%, chlorine of 450 ppm to 3000 ppm becomes necessary. Note that, in the present invention, the chlorine content shows a content as chlorine atoms.

Next, a manufacturing method of the hydrogen combustion catalyst according to the present invention will be explained. The catalyst manufacturing method according to the present invention is roughly classified into a hydrophobization step of bonding a functional group to a hydroxyl group on a carrier surface by substitution, a supporting step of supporting ions of platinum and palladium on the carrier, and a heat treatment step of heat-treating the carrier to thereby reduce ions of platinum and palladium.

In the hydrophobization step of a carrier, the functional group is bonded to a hydroxyl group on the carrier surface by substitution to thereby hydrophobize a carrier, by immersing an inorganic oxide to be the carrier in a solution of a compound of a functional group having an alkyl group with three or less carbon atoms at a terminal. A silane inorganic surface modifier is preferable as a compound for the hydrophobization, and a preferable silane inorganic surface modifier having an alkyl group at a terminal includes any of trimethylmethoxysilane, trimethylethoxysilane, trimethylchlorosilane, dimethyldimethoxysilane, dimethyldiethoxysilane, dimethyldichlorosilane, methyltrimethoxysilane, methyltriethoxysilane, methyltrichlorosilane, triethylmethoxysilane, triethylethoxysilane, triethylchlorosilane, diethyldimethoxysilane, diethyldiethoxysilane, diethyldichlorosilane, ethyltrimethoxysilane, ethyltriethoxysilane, ethyltrichlorosilane, tripropylmethoxysilane, tripropylethoxysilane, tripropylchlorosilane, dipropyldimethoxysilane, dipropyldiethoxysilane, dipropyldichlorosilane, propyltrimethoxysilane, propyltriethoxysilane and propyltrichlorosilane. Compounds having a propyl group include not only linear ones but also branched ones.

As a concrete method of the carrier hydrophobization treatment, a carrier is immersed in a solution obtained by dissolving the above-described compound in a solvent. At this time, hydrogen in a hydroxyl group on the carrier surface is substituted with a hydrophobic functional group. After that, the carrier is taken out from the solution and is suitably washed and dried. Note that the catalyst according to the present invention is preferably completely substituted with hydroxyl groups on the carrier surface. The amount of a compound to be mixed in the solution can be calculated from a coverage area (m²/g) prescribed for the respective compounds, weight (g) and a specific surface area (m²/g) of a carrier ((carrier weight x carrier specific surface area)/coverage area of a compound), and, roughly, a compound of 1.0 to 100 g relative to 100 g of the carrier is used. Further, a liquid amount of the solution (solvent) is preferably set to an amount allowing the carrier to be completely immersed.

The step of supporting a catalyst metal on the hydrophobized carrier is, basically, the same as that in a manufacturing method of a general catalyst. That is, there is a method in which the carrier is brought into contact with a solution of a metal compound of catalyst metal, and, after that, an atomic metal is supported by a heat treatment. Here, in the present hydrogen combustion catalyst, the chlorine content is required to be in a prescribed range. In the present invention, as metal compounds, solutions of a platinum compound and a palladium compound are brought into contact with the carrier as metal compounds, and in the present invention, chloride of platinum is used as a platinum compound and chloride of palladium is used as a palladium compound in order to control concentration of chlorine. The purpose is to introduce chlorine into the catalyst by using a chlorinated compound in a stage of a raw material.

Platinum compounds to be preferably used here include platinum compounds such as chloroplatinic acid, tetraammineplatinum dichloride, hexaammineplatinum tetrachloride, potassium chloroplatinate and platinum chloride. Furthermore, palladium chloride, dichlorodiamminepalladium, tetraamminepalladium dichloride and the like are preferable as palladium compounds. These platinum compounds and palladium compounds are brought into contact with (adsorbed to) the carrier in a solution state. Compound concentration in the solution is adjusted in accordance with an amount of the catalyst metal to be supported. Preferably the concentration of the solution is set to 0.04 to 6.0 mass%. Furthermore, in the present invention, since the carrier has hydrophobicity, a polar organic solvent such as alcohol is preferably applied as the solvent of the compound solution, but a mixed solvent of water and a polar organic solvent is also acceptable. In the mixed solvent, a volume ratio of water/polar organic solvent is preferably 5 to 90, more preferably 40 to 85. Note that amounts of platinum and palladium when a platinum compound solution and a palladium compound solution are to be adsorbed to the carrier is preferably set to 12:1 to 1:12 in terms of mole ratio, as described above.

When a platinum compound solution and a palladium compound solution are to be adsorbed to the carrier, each of the compound solutions may be adsorbed independently, and the order of the compound solutions do not matter. Furthermore, a mixture of both compound solutions may be adsorbed to the carrier. As to an adsorbing method of the solution, a carrier may be immersed in the solution, or the solution may be dropped onto a carrier. "Simultaneous" supporting in the present invention means a state where both platinum and palladium are supported in a completed catalyst, and is not intended to limit timing of supporting each catalyst metal in a manufacturing process of a catalyst.

The platinum compound and the palladium compound are adsorbed onto the carrier by bringing the platinum compound solution and the palladium compound solution into contact with a carrier. After that, the respective ions are reduced to thereby generate atomic platinum and palladium, by suitably performing drying and heat treatment. Furthermore, in the process of the heat treatment, rearrangement of platinum atoms and palladium atoms is generated, and a suitable supporting state such as alloying or close supporting of these is expressed. In addition, in the present invention, content of chlorine in the catalyst is controlled by adjusting heat treatment conditions. Heating caused by the heat treatment brings about volatilization of chlorine introduced in a stage of a raw material, and too much heat treatment causes chlorine to fall below a prescribed content.

As to the heat treatment condition, a particularly necessary matter is setting of a heat treatment temperature. When heat treatment temperature is high, a catalyst having a low chlorine content is obtained by excessive volatilization of chlorine. On the other hand, when heat treatment temperature is low, reduction and a suitable supporting state of platinum and palladium hardly progress. According to the examination by the present inventors, the temperature of 150 to 280°C is set as a heat treatment temperature that ensures a balance between the reduction and securement of the chlorine content. When temperature exceeds the range, disappearance of chlorine becomes intense and control of the chlorine content in a prescribed range becomes hard. Note that the heat treatment temperature is particularly preferably set to 150 to 250°C for adjusting the chlorine content.

Furthermore, the heat treatment is required to be performed under an appropriate reduction atmosphere, which is a mixed gas atmosphere that contains 1 to 10 volume% of hydrogen, and an inert gas (such as nitrogen or argon) as the residual part. Regarding the mixed gas, disappearance of chlorine increases in an atmosphere with an excessively high hydrogen concentration, and thus 10 volume% is set to the upper limit of the hydrogen concentration. Note that heat treatment time is preferably set to 0.5 to 10 hours. The heat treatment time of less than 0.5 hours does not generate sufficient catalyst metal, and the heat treatment time of more than 10 hours lowers the content of chlorine even at the above-described heat treatment temperature.

The hydrogen combustion catalyst according to the present invention described above does not require heating for suppressing adsorption of water generated by hydrogen combustion reaction and water in an atmosphere, and can cause a hydrogen combustion reaction to continue at relatively low temperatures. Furthermore, in the hydrogen combustion catalyst according to the present invention, a decrease in activity by catalyst poisoning is suppressed even when iodine is included in an atmosphere. Concretely, a treating method of a hydrogen-containing gas using the present hydrogen combustion catalyst is effective even when a hydrogen-containing gas to be treated contains moisture of not more than the amount of saturated vapor at the reaction temperature and an iodine concentration of 0.01 to 20 ppm. The reaction temperature is set to 10 to 500°C.

### ADVANTAGEOUS EFFECTS OF INVENTION

As described above, in the hydrogen combustion catalyst according to the present invention, the configuration of the catalyst metal is optimized, and the chlorine content in the catalyst is set in a suitable range. Accordingly, even when iodine is contained in a gas to be treated, hydrogen combustion can be continuously performed without a large decrease in activity. Furthermore, the catalyst according to the present invention presupposes use of a carrier having hydrophobicity, and a decrease in activity by moisture is also suppressed.

In addition, the hydrogen combustion catalyst according to the present invention can be applied to various kinds of equipment for hydrogen combustion. In particular, it is useful as a catalyst mounted to a hydrogen combustion apparatus (hydrogen recombiner) in an atomic power station.

Moreover, the present inventive hydrogen combustion catalyst is also effective for combustion of deuterium (D2) and tritium (T) which are isotopes of hydrogen. These hydrogen isotopes may be treated in nuclear-related facilities such as nuclear fusion generation facilities, and the hydrogen combustion catalyst can be applied also to hydrogen combustion apparatuses set up in these facilities.

### BRIEF DESCRIPTION OF DRAWINGS

Figs. 1A and 1B show results of hydrogen combustion tests of hydrogen catalysts according to Examples 1 to 5.
Figs. 2A and 2B show results of hydrogen combustion tests of hydrogen catalysts according to Comparative Examples 1 to 5.

### DESCRIPTION OF EMBODIMENTS

Hereinafter, the best embodiment in the present invention will be explained. In the present embodiment, silica having been subjected to hydrophobization treatment was set as a carrier, and a hydrogen combustion catalyst was manufactured by supporting platinum and palladium on the silica.

Example 1: First, 100 g of a silica carrier (specific surface area: 230 m²/g) was prepared as a carrier, and was subjected to a hydrophobization treatment. The hydrophobization treatment was performed by adding a mixed liquid of 40 g of methyltrimethoxysilane, 50 g of pure water and 50 g of ethanol to the silica carrier and by shaking and stirring the same. After a lapse of one day, the resultant substance was taken out and washed with pure water, and then, was dried at 200°C. Prior to a treatment, the carrier was washed with pure water, and was immersed in an ethanol solution of each of silane inorganic surface modifiers (concentration: 15 wt%) for 24 hours. Then, the carrier was taken out, washed with pure water, and then dried at 200°C. Note that increase in weight by the silane treatment in this case was about 12%.

Next, 50 g of a chloroplatinic acid ethanol solution (Pt concentration: 1.46 mass%, which corresponds to 0.73 g of platinum) and 50 g of a palladium chloride solution (Pd concentration: 0.80 mass%, which corresponds to 0.40 g of palladium) were added, as a mixed liquid, to the silica carrier having been subjected to the hydrophobization treatment and were impregnated (supporting ratio between platinum and palladium was 1:1 in mole ratio). After that, ethanol was vaporized with a rotary evaporator, and the carrier was then set in a column, and 3 volume% hydrogen gas (N₂ balance) was flown at 230°C for 2 hours to thereby perform reduction, and a hydrogen combustion catalyst was manufactured.

Furthermore, a chlorine content was measured as to the hydrogen combustion catalyst manufactured as described above. The measurement of the chlorine content was performed by sufficiently crushing the catalyst into a powder with an agate mortar, and by measuring a chlorine content in the powder through the use of a coulometric chlorine analyzer. From the analysis, the measurement value of the chlorine content of the hydrogen combustion catalyst according to the Example was 1000 ppm. In addition, since the total supported amount of the catalyst metal (platinum, palladium) in the hydrogen combustion catalyst manufactured in the Example is 1.0 mass%, the chlorine content per 1 wt% of the total supported amount of platinum and palladium in the catalyst is 1000 ppm.

Example 2: In Example 1, a catalyst was manufactured by setting the hydrogen concentration in a reduction atmosphere to be 10 volume% as a heat treatment condition after impregnating a compound solution of platinum and palladium. Other manufacturing conditions are the same as those in Example 1. The chlorine content of the catalyst manufactured in this Example 2 was 400 ppm per 1 wt% of the total supported amount of platinum and palladium.

Example 3: In Example 1, a heat treatment temperature was set as low as 180°C while setting the hydrogen concentration to be 3 volume% in the same way as in Example 1 as a heat treatment condition after impregnating the compound solution of platinum and palladium. Other manufacturing conditions are the same as those in Example 1. The chlorine ion concentration of the catalyst manufactured in this Example 3 was 1500 ppm per 1 wt% of the total supported amount of platinum and palladium.

Example 4: In this Example 4, a ratio (mole ratio) of supported amounts between platinum and palladium being catalyst metals is changed relative to Example 1 (Pt:Pd = 1:1). In the Example 4, when impregnating a chloroplatinic acid ethanol solution and a palladium chloride solution, Pt concentration in a chloroplatinic acid solution was set to 0.35 mass% and Pd concentration in a palladium chloride solution was set to 1.91 mass%. The use amount of each solution was set to 50 g (corresponding to 0.175 g of platinum and corresponding to 0.955 g of palladium) in the same way as in Example 1. A ratio of supported amounts between platinum and palladium is Pt:Pd = 1:10 in terms of mole ratio. Other manufacturing conditions including the heat treatment condition were set to the same as those in Example 1. The total supported amount of the catalyst metal (platinum, palladium) in the catalyst manufactured here is 1 mass%. In addition, the chlorine content of the catalyst was 1000 ppm per 1 wt% of the total supported amount of platinum and palladium.

Example 5: in contrast to Example 4, a ratio of supported amounts between platinum and palladium is set to Pt:Pd = 10:1 in terms of mole ratio. In the present Example, when impregnating a chloroplatinic acid ethanol solution and a palladium chloride solution, a Pt concentration in a chloroplatinic acid solution was set to 2.142 mass% and a Pd concentration in a palladium chloride solution was set to 0.116 mass%. The use amount of each solution was set to 50 g (corresponding to 1.071 g of platinum and corresponding to 0.058 g of palladium) in the same way as in Example 1. Other manufacturing conditions including the heat treatment condition were set to the same as those in Example 1. The total amount of the supported catalyst metal (platinum, palladium) in the catalyst manufactured here is 1 mass%. In addition, the chlorine content of the catalyst was 600 ppm per 1 wt% of the total supported amount of platinum and palladium.

Comparative Example 1: In Comparative Example for the above Example, acetylacetonate complexes bis(acetylacetonate)platinum (II), bis(acetylacetonate)palladium (II)) not containing chlorine were used as a platinum compound and a palladium compound to be raw materials of catalyst metal. As a platinum compound solution, 50 g of an ethanol solution of bis(acetylacetonate)platinum (Pt concentration: 1.46 mass%, corresponding to 0.73 g of platinum), and 50 g of an ethanol solution of bis(acetylacetonate)palladium (Pd concentration: 0.80 mass%, corresponding to palladium 0.40 g) were impregnated into the same hydrophobized silica carrier as in Example 1, which was used as a catalyst in the same process as in Example 1. Heat treatment conditions were set to 230°C and 2 hours. The chlorine content of the catalyst manufactured in this Comparative Example was 10 ppm per 1 wt% of the total supported amount of platinum and palladium.

Comparative Example 2: In the Comparative Example, as compared with the above Example 1, a catalyst was manufactured by setting a hydrogen concentration as high concentration as 30 volume% as to a heat treatment condition after impregnating the compound solution of platinum and palladium. Other manufacturing conditions are the same as those in Example 1. The chlorine content of the catalyst manufactured in the Comparative Example was 50 ppm per 1 wt% of the total supported amount of platinum and palladium.

Comparative Example 3: In the Comparative Example, a heat treatment condition after the impregnation of the compound solution is set to high temperature. Heat treatment conditions were set so as to be a heat treatment temperature of 300°C while setting a hydrogen concentration to 3 volume% that is the same as in Example 1. Other manufacturing conditions are the same as those in Example 1. Chlorine ion concentration of the catalyst manufactured in the Comparative Example was 200 ppm per 1 wt% of the total supported amount of platinum and palladium.

Comparative Examples 4 and 5: In order to confirm the significance of supporting platinum and palladium at the same time as the configuration of catalyst metal, catalysts supporting platinum alone (Comparative Example 4) and palladium alone (Comparative Example 5) were manufactured. Basic manufacturing processes were similar to those in Example 1, but either a platinum compound solution alone or a palladium compound solution alone was impregnated into a hydrophobized silica carrier. After that, a heat treatment was performed under the same condition as that in Example 1. Chlorine ion concentrations of catalysts manufactured in these Comparative Examples were 500 ppm (per 1 wt% of the supported amount of platinum: Comparative Example 4) and 1100 ppm (per 1 wt% of the supported amount of palladium: Comparative Example 5).

Combustion performance of hydrogen mixture was evaluated for each of catalysts manufactured in Examples 1 to 5 and Comparative Examples 1 to 5. In a hydrogen combustion test, hydrogen (H₂) mixed gas that contains hygroscopic moisture was introduced, as a reaction gas, into a catalyst layer filled with 20 mL of each catalyst immediately after the manufacture, hydrogen concentrations in mixed gases before and after passing through the catalyst layer were measured with gas chromatograph, and hydrogen combustion ratios at the respective reaction temperatures were calculated. Calculation was performed as:
hydrogen combustion ratio = (hydrogen concentration before reaction - hydrogen concentration after reaction)/hydrogen concentration before reaction x 100. A reaction gas to be introduced for use includes two types, that is, a gas made into a moist condition (water vapor concentration: 22000 ppm) by bubbling a mixed gas of 1000 ppm of a hydrogen concentration (air balance) to pure water, and a gas made into a moist condition (water vapor concentration: 22000 ppm, iodine gas concentration: 4 ppm) by bubbling a similar mixed gas to iodine-saturated water (iodine concentration: 0.33 g/L). Test conditions were set as follows.
- Mixed gas flow rate: 1.6 NL/min
- SV: 4800 h⁻¹
- Reaction temperature: 100°C to 160°C
- Test method: Temperature rising rate was set to 2 °C/min, kept for 2 hours after reaching a prescribed reaction temperature, and the reaction gas was analyzed.

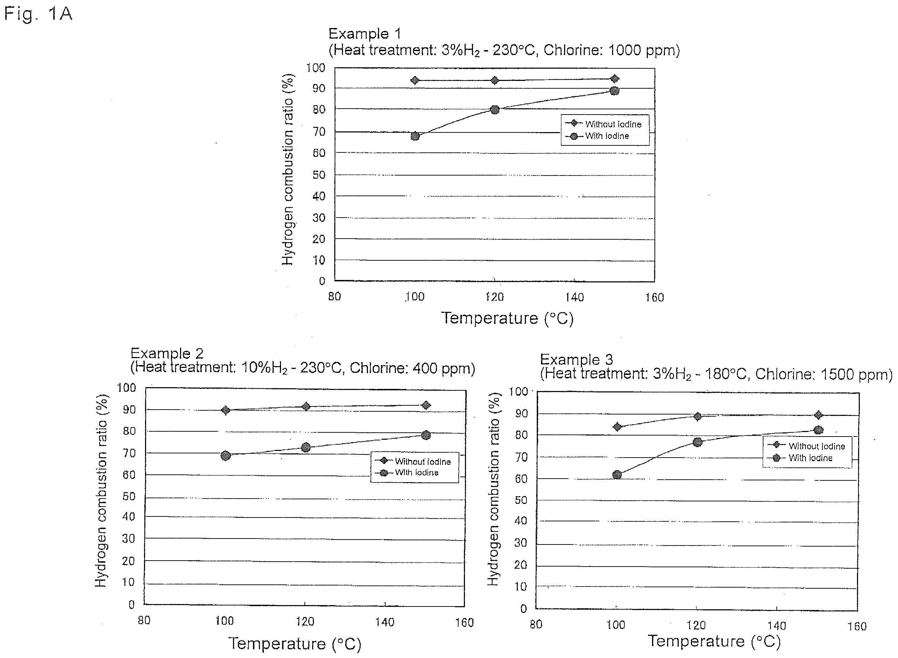

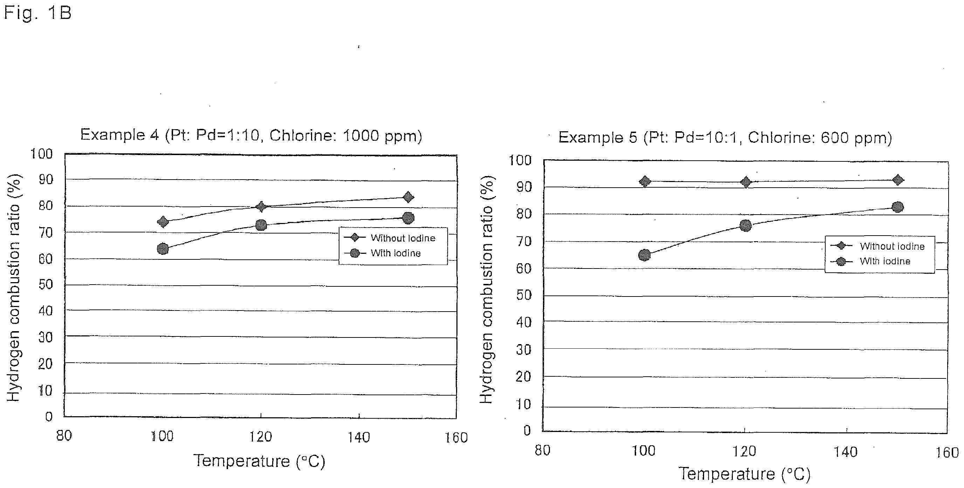

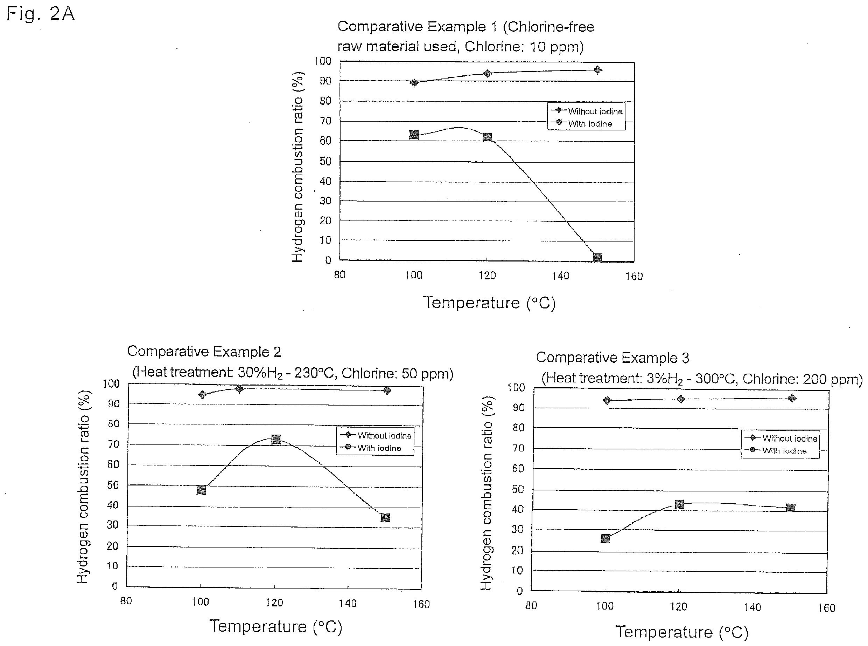

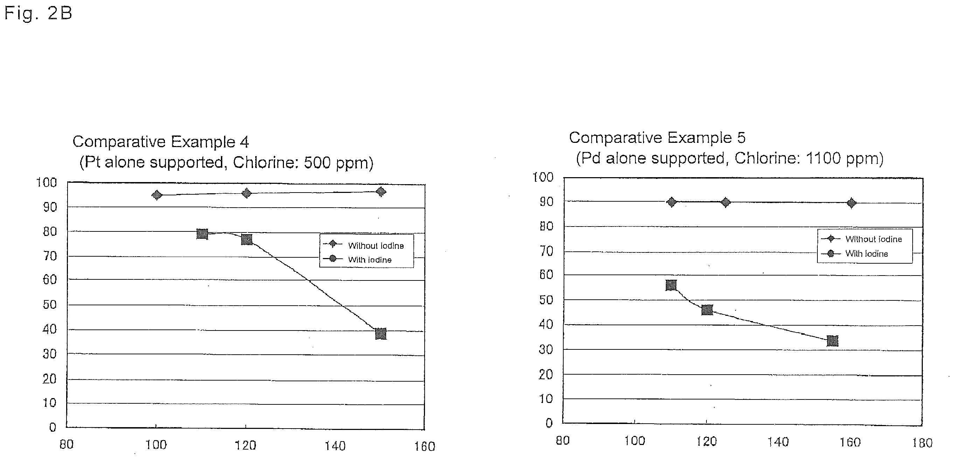

Figs. 1 and 2 show results of hydrogen combustion test for the respective catalysts of Examples 1 to 5 and Comparative Examples 1 to 5. From Fig. 1, catalysts according to Examples 1 to 5 exhibit a slight decrease in activity in the presence of moist iodine as compared with a case of not containing iodine, but the activity rises along with the reaction temperature and the decrease in activity of hydrogen combustion is suppressed as compared with the respective Comparative Examples. The chlorine content is appropriately adjusted in catalysts in these Examples.

Furthermore, the ratio (mole ratio) between supported platinum and supported palladium at the time of catalyst manufacturing was set in a range of 1:10 to 10:1 (1:1 in Examples 1 to 3), and results were excellent also in the case of these catalysts. Note that, although chlorine contents are different when making a comparison between Examples 4 and 5 having the same heat treatment condition, it is assumed that this is because adsorption capability for chlorine is different depending on metal species (platinum, palladium), and it is considered that this is because an chlorine adsorption amount by palladium is larger than that by platinum.

In contrast, when results of the respective Comparative Examples in Fig. 2 are referred to, first, in Comparative Example 1 (chlorine content: 10 ppm) in which chloride as a raw material of a catalyst is not used, the activity tends to decrease along with temperature rise in the presence of iodine. This is because iodine poisoning gradually progresses from the start of a reaction to thereby lead to deactivation.

Furthermore, even when a chloride is used as a raw material of a catalyst, in a case where chlorine disappears in a manufacturing process, suppression of iodine poisoning can not be observed. In Comparative Example 2, a hydrogen concentration at the time of the heat treatment was set as high as 30% and the catalyst had a low chlorine content of 50 ppm, and the activity of the catalyst also decreased with a lapse of reaction time. In addition, Comparative Example 5 gives a catalyst having a low chlorine content (chlorine content: 200 ppm) by setting a heat treatment temperature to rather high temperature (300°C), and the same also applies to the catalyst.

However, even if a catalyst appropriately contains chlorine, influence by iodine poisoning cannot be avoided in the case where the catalyst does not support both platinum and palladium concurrently as catalyst metal. Comparative Examples 4 and 5 gave catalysts in which platinum alone (Comparative Example 4, chlorine content: 500 ppm) and palladium alone (Comparative Example 5, chlorine content: 1100 ppm) were respectively applied as catalyst metals, and decrease in activity caused by iodine poisoning was observed in these catalysts.

The maintenance of catalytic activity in an iodine-existing state is an essential effect in the present invention, and, for the purpose, it is necessary to set appropriately both the configuration of catalyst metal and chlorine content in a catalyst. It was confirmed that the respective Comparative Examples not provided with these were not suitable ones.

### INDUSTRIAL APPLICABILITY

As described, the hydrogen combustion catalyst according to the present invention is a catalyst obtained by suppressing catalyst poisoning by iodine in combustion of hydrogen gas. In the catalyst according to the present invention, influence caused by moisture is also eliminated. Accordingly, the present invention is useful as a catalyst for a hydrogen combustion device in nuclear power facilities.

## Claims

1. A hydrogen combustion catalyst comprising a catalyst metal supported on a carrier composed of an inorganic oxide, wherein:
a functional group having at least one alkyl group with three or less carbon atoms is bonded to a terminal of a hydroxyl group on the carrier surface by substitution;
platinum and palladium are supported as the catalyst metal; a ratio of supported amounts between platinum and palladium on the carrier is in a range of 12:1 to 1:12 in terms of molar ratio; and
a chlorine content is 300 ppm to 2,000 ppm per 1 mass% of a total supported amount of a supported amount of platinum and a supported amount of palladium.

2. The hydrogen combustion catalyst according to claim 1, wherein the functional group bonded to a hydroxyl group on the carrier surface is an organic silane.

3. The hydrogen combustion catalyst according to claim 1 or 2, wherein the inorganic oxide constituting the carrier is any of alumina, silica, silica-alumina, zeolite, zirconia and titania.

4. The hydrogen combustion catalyst according to any of claims 1 to 3, wherein the total supported amount of a supported amount of platinum and a supported amount of palladium is 0.1 to 5.0 mass% based on mass of a whole catalyst.

5. A manufacturing method of the hydrogen combustion catalyst, the hydrogen combustion catalyst being defined in any of claims 1 to 4, comprising:
a hydrophobization step of immersing an inorganic oxide to be a carrier in a solution of a compound containing a functional group having an alkyl group with three or less carbon atoms at a terminal, to thereby bond the functional group to a hydroxyl group on the carrier surface by substitution;
a supporting step of bringing a platinum compound solution and a palladium compound solution into contact with the carrier after the hydrophobization step to thereby support a platinum ion and a palladium ion; and
a heat treatment step of heat-treating the carrier after the supporting step to thereby reduce the platinum ion and the palladium ion,
wherein:
in the supporting step, chloride of platinum is used for the platinum compound solution and chloride of palladium is used for the palladium compound solution; and
the heat treatment step is to heat the carrier in a reducing atmosphere at 150 to 280°C in temperature, wherein the reducing atmosphere in the heat treatment step is a mixed gas in which hydrogen concentration is 1 to 10 volume% and a residual part is an inert gas.

6. The manufacturing method of the hydrogen combustion catalyst according to claim 5, wherein the compound containing a functional group is a silane inorganic surface modifier.

7. The manufacturing method of the hydrogen combustion catalyst according to claim 6, wherein the silane inorganic surface modifier is any of trimethylmethoxysilane, trimethylethoxysilane, trimethylchlorosilane, dimethyldimethoxysilane, dimethyldiethoxysilane, dimethyldichlorosilane, methyltrimethoxysilane, methyltriethoxysilane, methyltrichlorosilane, triethylmethoxysilane, triethylethoxysilane, triethylchlorosilane, diethyldimethoxysilane, diethyldiethoxysilane, diethyldichlorosilane, ethyltrimethoxysilane, ethyltriethoxysilane, ethyltrichlorosilane, tripropylmethoxysilane, tripropylethoxysilane, tripropylchlorosilane, dipropyldimethoxysilane, dipropyldiethoxysilane, dipropyldichlorosilane, propyltrimethoxysilane, propyltriethoxysilane and propyltrichlorosilane.

8. A hydrogen combustion method of causing a hydrogen-containing gas to pass through the hydrogen combustion catalyst according to any of claims 1 to 4 and combusting hydrogen in the hydrogen-containing gas, wherein:
the hydrogen-containing gas contains moisture of not more than an amount of saturated vapor at reaction temperature and an iodine concentration of 0.01 to 20 ppm; and
hydrogen is combusted while the reaction temperature is set to 10 to 500°C.

## Patentansprüche

1. Wasserstoffverbrennungskatalysator, umfassend ein Katalysatormetall, das auf einem Träger geträgert ist, der aus einem anorganischen Oxid besteht, wobei:
eine funktionelle Gruppe mit mindestens einer Alkylgruppe mit drei oder weniger Kohlenstoffatomen an ein Ende einer Hydroxylgruppe durch Substitution auf der Trägeroberfläche gebunden ist;
Platin und Palladium als das Katalysatormetall geträgert sind; wobei ein Verhältnis von geträgerten Mengen zwischen Platin und Palladium auf dem Träger im Bereich von 12:1 bis 1:12 in Bezug auf das molare Verhältnis ist; und
ein Chlorgehalt 300 ppm bis 2.000 ppm pro 1 Masse-% einer gesamten geträgerten Menge einer geträgerten Menge Platin und einer geträgerten Menge Palladium ist.

2. Wasserstoffverbrennungskatalysator nach Anspruch 1, wobei die funktionelle Gruppe, die an eine Hydroxylgruppe auf der Trägeroberfläche gebunden ist, ein organisches Silan ist.

3. Wasserstoffverbrennungskatalysator nach Anspruch 1 oder 2, wobei das anorganische Oxid, das den Träger bildet, irgendeines von Aluminiumoxid, Siliciumdioxid, Siliciumdioxid-Aluminiumoxid, Zeolith, Zirkoniumoxid und Titandioxid ist.

4. Wasserstoffverbrennungskatalysator nach einem der Ansprüche 1 bis 3, wobei die gesamte geträgerte Menge einer geträgerten Platinmenge und einer geträgerten Palladiummenge 0,1 bis 5,0 Masse-% beträgt, bezogen auf die Masse des gesamten Katalysators.

5. Herstellungsverfahren des Wasserstoffverbrennungskatalysator, wobei der Wasserstoffverbrennungskatalysator nach einem der Ansprüche 1 bis 4 definiert ist, umfassend:
einen Hydrophobierungsschritt, bei dem ein anorganisches Oxid als ein Träger in eine Lösung einer Verbindung eingetaucht wird, die eine funktionelle Gruppe mit einer Alkylgruppe mit drei oder weniger Kohlenstoffatomen an einem Ende enthält, um dadurch die funktionelle Gruppe an eine Hydroxylgruppe durch Substitution auf der Trägeroberfläche zu binden;
einen Trägerschritt, bei dem eine Platinverbindungslösung und eine Palladiumverbindungslösung nach dem Hydrophobierungsschritt mit dem Träger in Kontakt gebracht werden, um dadurch ein Platin-Ion und ein Palladium-Ion zu trägem; und
einen Wärmebehandlungsschritt, bei dem der Träger nach dem Trägerschritt wärmebehandelt wird, um dadurch das Platin-Ion und das Palladium-Ion zu reduzieren, wobei:
im Trägerschritt Platinchlorid für die Platinverbindungslösung verwendet wird und Palladiumchlorid für die Palladiumverbindungslösung verwendet wird; und
der Wärmebehandlungsschritt darin besteht, den Träger in einer reduzierenden Atmosphäre bei einer Temperatur von 150 bis 280°C zu erwärmen, wobei die reduzierende Atmosphäre im Wärmebehandlungsschritt ein gemischtes Gas ist, in dem die Wasserstoffkonzentration 1 bis 10 Volumen-% ist und ein restlicher Teil ein Inertgas ist.

6. Herstellungsverfahren des Wasserstoffverbrennungskatalysator nach Anspruch 5, wobei die Verbindung, die eine funktionelle Gruppe enthält, ein anorganisches Silan-Oberflächenmodifikator ist.

7. Herstellungsverfahren des Wasserstoffverbrennungskatalysators nach Anspruch 6, wobei das anorganische Silan-Oberflächenmodifikator irgendeines von Trimethylmethoxysilan, Trimethylethoxysilan, Trimethylchlorsilan, Diemethyldimethoxysilan, Diemethyldiethoxysilan, Diemethyldichlorsilan, Methyltrimethoxysilan, Methyltriethoxysilan, Methyltrichlorsilan, Triethylmethoxysilan, Triethylethoxysilan, Triethylchlorsilan, Diethyldimethoxysilan, Diethyldiethoxysilan. Diethyldichlorsilan, Ethyltrimethoxysilan, Ethyltriethoxysilan, Ethyltrichlorsilan, Tripropylmethoxysilan, Tripropylethoxysilan, Tripropylchlorsilan, Dipropyldimethoxysilan, Dipropyldiethoxysilan, Dipropyldichlorsilan, Propyltrimethoxysilan, Propyltriethoxysilan und Propyltrichlorsilan.

8. Wasserstoffverbrennungsverfahren zum Bewirken von Strömen eines Wasserstoff-enthaltenden Gases durch den Wasserstoffverbrennungskatalysator nach einem der Ansprüche 1 bis 4 und Verbrennen des Wasserstoffs in dem Wasserstoff-enthaltenden Gas, wobei:
das Wasserstoff-enthaltende Gas Feuchtigkeit von nicht mehr als einer Menge von gesättigtem Dampf bei Reaktionstemperatur und eine lodkonzentration von 0,01 ppm bis 20 ppm enthält; und
Wasserstoff verbrannt wird, während die Reaktionstemperatur auf 10 bis 500°C eingestellt ist.

## Revendications

1. Catalyseur de combustion d'hydrogène comprenant un métal catalytique supporté sur un support composé d'un oxyde inorganique, dans lequel :
un groupe fonctionnel ayant au moins un groupe alkyle avec trois atomes de carbone ou moins est lié à une extrémité d'un groupe hydroxyle sur la surface de support par substitution ;
du platine et du palladium sont supportés en tant que métal catalytique ; un rapport de quantités supportées entre le platine et le palladium sur le support est situé dans une plage allant de 12 : 1 à 1 : 12 en termes de rapport molaire ; et
une teneur en chlore est de 300 ppm à 2 000 ppm pour 1 % en masse d'une quantité supportée totale d'une quantité supportée de platine et d'une quantité supportée de palladium.

2. Catalyseur de combustion d'hydrogène selon la revendication 1, dans lequel le groupe fonctionnel lié à un groupe hydroxyle sur la surface de support est un silane organique.

3. Catalyseur de combustion d'hydrogène selon la revendication 1 ou 2, dans lequel l'oxyde inorganique constituant le support est l'un quelconque parmi une alumine, une silice, une silice-alumine, une zéolithe, une zircone et un oxyde de titane.

4. Catalyseur de combustion d'hydrogène selon l'une quelconque des revendications 1 à 3, dans lequel la quantité supportée totale d'une quantité supportée de platine et d'une quantité supportée de palladium est de 0,1 à 5,0 % en masse sur la base d'une masse d'un catalyseur entier.

5. Procédé de fabrication du catalyseur de combustion d'hydrogène, le catalyseur de combustion d'hydrogène étant défini dans l'une quelconque des revendications 1 à 4, comprenant :
une étape d'hydrophobisation consistant à immerger un oxyde inorganique devant être un support dans une solution d'un composé contenant un groupe fonctionnel ayant un groupe alkyle avec trois atomes de carbone ou moins à une extrémité, pour ainsi lier le groupe fonctionnel à un groupe hydroxyle sur la surface de support par substitution ;
une étape de mise sur support consistant à mettre une solution de composé de palladium et une solution de composé de platine en contact avec le support après l'étape d'hydrophobisation pour ainsi supporter un ion de platine et un ion de palladium ; et
une étape de traitement thermique consistant à traiter thermiquement le support après l'étape de mise sur support pour ainsi réduire l'ion de platine et l'ion de palladium,
dans lequel :
dans l'étape de mise sur support, du chlorure de platine est utilisé pour la solution de composé de platine et du chlorure de palladium est utilisé pour la solution de composé de palladium ; et
l'étape de traitement thermique consiste à chauffer le support dans une atmosphère réductrice à une température de 150 à 280 °C, dans lequel l'atmosphère réductrice dans l'étape de traitement thermique est un mélange gazeux dans lequel la concentration en hydrogène est de 1 à 10 % en volume et une partie résiduelle est un gaz inerte.

6. Procédé de fabrication du catalyseur de combustion d'hydrogène selon la revendication 5, dans lequel le composé contenant un groupe fonctionnel est un modificateur de surface inorganique à base de silane.

7. Procédé de fabrication du catalyseur de combustion d'hydrogène selon la revendication 6, dans lequel le modificateur de surface inorganique à base de silane est l'un quelconque parmi le triméthylméthoxysilane, le triméthyléthoxysilane, le triméthylchlorosilane, le diméthyldiméthoxysilane, le diméthyldiéthoxysilane, le diméthyldichlorosilane, le méthyltriméthoxysilane, le méthyltriéthoxysilane, le méthyltrichlorosilane, le triéthylméthoxysilane, le triéthyléthoxysilane, le triéthylchlorosilane, le diéthyldiméthoxysilane, le diéthyldiéthoxysilane, le diéthyldichlorosilane, l'éthyltriméthoxysilane, l'éthyltriéthoxysilane, l'éthyltrichlorosilane, le tripropylméthoxysilane, le tripropyléthoxysilane, le tripropylchlorosilane, le dipropyldiméthoxysilane, le dipropyldiéthoxysilane, le dipropyldichlorosilane, le propyltriméthoxysilane, le propyltriéthoxysilane et le propyltrichlorosilane.

8. Procédé de combustion d'hydrogène comprenant le fait d'amener un gaz contenant de l'hydrogène à passer à travers le catalyseur de combustion d'hydrogène selon l'une quelconque des revendications 1 à 4 et la combustion de l'hydrogène dans le gaz contenant de l'hydrogène, dans lequel :
le gaz contenant de l'hydrogène contient de l'humidité dans une quantité non supérieure à une quantité de vapeur saturée à une température réactionnelle et une concentration en iode de 0,01 à 20 ppm ; et
l'hydrogène est consommé tandis que la température réactionnelle est fixée de 10 à 500 °C.
